Europäisches Patentamt

European Patent Office

Office européen des brevets

(19)

(11) **EP 0 834 861 B1**

(12) **EUROPÄISCHE PATENTSCHRIFT**

(45) Veröffentlichungstag und Bekanntmachung des Hinweises auf die Patenterteilung:
**28.11.2001 Patentblatt 2001/48**

(51) Int Cl.⁷: **G10L 15/14**

(21) Anmeldenummer: **97115989.2**

(22) Anmeldetag: **12.09.1997**

(54) **Verfahren zur Berechnung eines Schwellenwertes für die Spracherkennung eines Schlüsselwortes**

Process for the calculation of a threshold value for the speech recognition of a key-word

Procédé pour la calculation du seuil pour la reconnaissance de la langue d'un mot clé

(84) Benannte Vertragsstaaten:
**DE ES FR GB IT NL**

(30) Priorität: **01.10.1996 DE 19640587**

(43) Veröffentlichungstag der Anmeldung:
**08.04.1998 Patentblatt 1998/15**

(73) Patentinhaber: **SIEMENS AKTIENGESELLSCHAFT 80333 München (DE)**

(72) Erfinder:
- **Junkawitsch, Jochen 80809 München (DE)**
- **Höge, Harald 82131 Gauting (DE)**
- **Ruske, Günther 80801 München (DE)**

(56) Entgegenhaltungen:
**EP-A- 0 601 778     US-A- 5 168 548**
**US-A- 5 218 668**

**Beschreibung**

Die Erfindung bezieht sich auf die Berechnung von Schwellenwerten für Schlüsselwörter, welche in gesprochenem Text erkannt werden sollen. Solche Spracherkennungsverfahren werden üblicherweise als "Wordspotting-Verfahren" bezeichnet.

Spracherkennung und Sprachsynthese leisten einen wichtigen Beitrag im Zusammenhang mit der Erstellung von benutzerfreundlichen Bedienoberflächen von technischen Geräten. Der akustische Dialog stellt die natürlichste Form der menschlichen Kommunikation dar. Um die Nachteile von Einzelworterkennungssystemen, bei denen die zu erkennenden Worte kommandohaft mit einer deutlichen Pause vor und nach dem Wort gesprochen werden müssen, zu beseitigen, gibt es Bestrebungen sogenannte Fließtexterkennungssysteme zu etablieren. Wegen der hohen Hardwareanforderungen, welche solche Geräte erfüllen müssen sind diese jedoch sehr teuer zu entwickeln und zu fertigen. Einen Mittelweg zwischen diesen beiden Systemen geht die Einzelworterkennung in gesprochenem Fließtext, auch als sogenanntes "Keyword-Spotting" bekannt. Dabei soll lediglich festgestellt werden, ob in gesprochenem Text und wann ein bestimmtes Schlüsselwort gesprochen wurde. Im Gegensatz zu herkömmlichen Fließtexterkennern, welche sehr große Wissensbasen benötigen, erfordert das "Keyword-Spotting" nur einen wesentlich kleineren Aufwand und weniger Vorwissen, da nicht mehr das Ziel besteht den kompletten Sprachabschnitt zu erkennen, sondern vielmehr lediglich festzustellen ob das Keyword in der Sprachäußerung enthalten oder nicht enthalten ist. Grundlagen hierzu sind in: R.C. Rose "Keyword detection in conventional speech utterances using hidden Markov model based continuous speech recognition in: Computer Speech and Language 9, pp. 309-333, (1995) angegeben.

Die gesprochenen Schlüsselworte sind also von jeglichem anderen gesprochenen Text zu unterscheiden. Um für die einzelnen Schlüsselwörter eine Spracherkennung durchführen zu können, müssen für diese geeignete Wortmodelle gefunden werden, welche häufig in Form von phonembasierenden Hidden-Markov-Modellen realisiert werden. Anhand der Wahrscheinlichkeitsdichteverteilung der "Scores" dieser Wortmodelle müssen Entscheidungsschwellen festgelegt werden, anhand derer das System entscheiden kann, ob das gesprochene Schlüsselwort vorliegt oder nicht. Zur Bestimmung der bedingten Wahrscheinlichkeitsdichtefunktion der einzelnen Schlüsselwörter, welche zur Ermittlung der jeweiligen Entscheidungsschwelle herangezogen werden soll, könnten die Wort- und Hintergrundverteilungen für jedes einzelne Schlüsselwort experimentell ermittelt werden, doch dieses Vorgehen birgt den Nachteil, daß bestimmte Schlüsselwörter in natürlicher Sprache so selten auftreten, daß riesige Sprachdatenbanken mit einem enormen Rechenaufwand durchgearbeitet werden müßten um repräsentative Histogramme von diesen Schlüsselwörtern erstellen zu können. Ebenso wäre eine Schwellenwertbestimmung für solche Worte nicht möglich, welche nicht oder nicht häufig genug in Sprachdatenbanken vorkommen. Für diese müßten dann zeitaufwendig entsprechende Sprechermodelle erstellt werden.

Der Erfindung liegt deshalb die Aufgabe zugrunde, ein Verfahren anzugeben, mit welchem Wahrscheinlichkeitsdichtefunktionen von Score-Verteilungen von Schlüsselwörtern berechnet werden können, und welche als Grundlage dienen für die Berechnung von Entscheidungsschwellen für ein Schlüsselworterkennungssystem.

Diese Aufgabe wird gemäß den Merkmalen des Patentanspruches 1 gelöst.

Weiterbildungen der Erfindung ergeben sich aus den abhängigen Ansprüchen.

Ein großer Vorteil der Erfindung besteht darin, daß die Wahrscheinlichkeitsdichtefunktion der Score-Verteilungen der einzelnen Schlüsselwörter aus den Phonem-Modellen der jeweiligen Schlüsselworte synthetisiert werden kann.

Ein weiterer Vorteil des erfindungsgemäßen Verfahrens besteht darin, daß für die Synthese der Wortmodelle, bzw. der einzelnen Phonem-Modelle, Standardverteilungen, wie beispielsweise die Gauß oder die Laplace- oder Binomialverteilungen verwendet werden können, um den Rechenaufwand bei der Modellierung und der Spracherkennung gering zu halten.

Besonders vorteilhaft werden erfindungsgemäß die Wahrscheinlichkeitsdichteverteilungen für die einzelnen Schlüsselworte gemäß den angegebenen Gleichungen bestimmt, weil damit sowohl Standardverteilungen, als auch die Länge des jeweiligen Phonems bezogen auf die Wortlänge berücksichtigt werden. Besonders vorteilhaft können nach dem erfindungsgemäßen Verfahren sowohl Schwellenwerte aus Falschakzeptanzraten, als auch von vorgegebenen Detektionsraten bestimmt werden, indem der Flächeninhalt unter der gefundenen Wahrscheinlichkeitsdichteverteilung für das gesprochene Schlüsselwort, bzw. unter der Wahrscheinlichkeitsdichteverteilung für nicht gesprochene Schlüsselwort auf ein bestimmtes Maß beschränkt wird. Durch den Einsatz von Normalverteilungen für die entsprechenden Wahrscheinlichkeitsdichteverteilungen wird die Berechnung des Schwellenwertes insofern vereinfacht, da die Flächenberechnung für Normalverteilungen sich einfacher gestaltet.

Besonders vorteilhaft wird das erfindungsgemäße Verfahren zur Schwellenwertberechnung in einem Spracherkennungsverfahren eingesetzt, in welchem Schlüsselworte erkannt werden sollen.

Besonders vorteilhaft werden in einem solchen Spracherkennungsverfahren mehrere Schlüsselworte erkannt, indem parallel mehrere Erkenner vorhanden sind, welche wortindividuelle Entscheidungsschwellen für die jeweiligen Schlüsselworte bewerten, da dadurch die Erkennungsleistung eines solchen Spracherkennungssystems heraufgesetzt und die Erkennung beschleunigt wird. Experimentelle Befunde haben gezeigt, daß die Schwellenwerte abhängig sind von den jeweiligen Wortlängen und der Anzahl bzw. der Signifikanz der verwendeten Phoneme für die einzelnen Schlüsselworte.

Besonders vorteilhaft wird die Viterbi-Suche in einem solchen erfindungsgemäßen Spracherkennungsverfahren mit Hilfe eines Viterbi-Algorithmus durchgeführt, welcher in der Lage ist, unterschiedliche Pfadlängen zu berücksichtigen, also auf die Pfadlänge normierte Scores verwendet. Auf diese Weise können die Scores der Schlüsselwortmodelle für unterschiedliche Pfadlängen bei der Verwendung von Hidden-Markov-Modellen vergleichbar aufakkumuliert werden.

Im folgenden wird die Erfindung anhand von Figuren weiter erläutert.

Figur 1    zeigt den prinzipiellen Aufbau eines Schlüsselwortspracherkennungssystems.

Figur 2    zeigt ein Beispiel eines Spracherkenners von einem solchen Schlüsselwortspracherkennungssystem.

Figur 3    zeigt als Beispiel den Vergleich von experimentell ermittelten und berechneten Wahrscheinlichkeitsdichteverteilungen sowohl für ein gesprochenes, als auch für nicht gesprochenes Schlüsselwort.

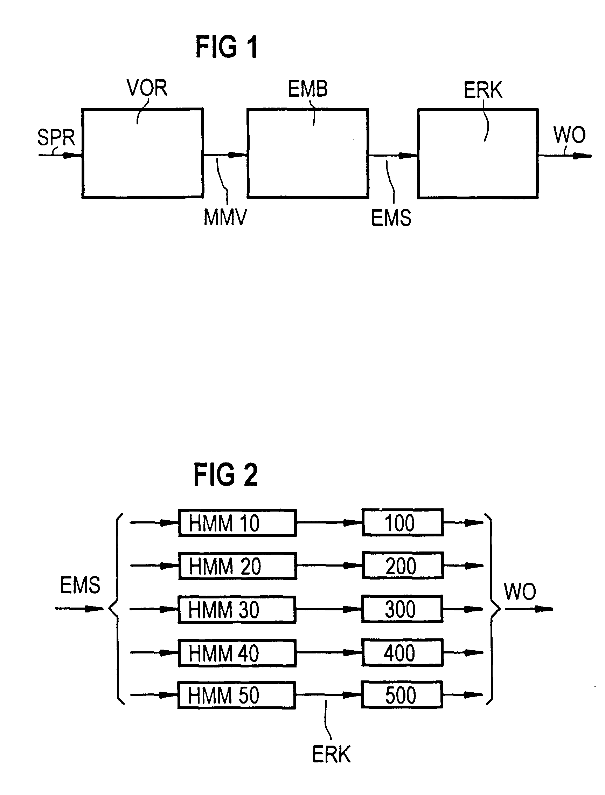

In Figur 1 ist schematisch ein Schlüsselworterkenner dargestellt. Er besteht beispielsweise aus einer Vorverarbeitungseinheit VOR, welche ein eingehendes Sprachsignal SPR in Merkmalsvektoren MMV zerlegt und diese einer Kalkulationseinheit EMB zuführt, welche die Emissionsberechnung von beispielsweise Hidden-Markov-Modellen für diesen Merkmalsvektor durchführt. Die Emissionswahrscheinlichkeiten EMS werden dann beispielsweise einem Erkenner ERK zugeführt, welcher anhand der Emissionen die Entscheidung trifft, ob das Schlüsselwort gesprochen wurde oder nicht und falls es gesprochen wurde das Wort WO ausgibt. In der Vorverarbeitungseinheit VOR wird beispielsweise aus einem zeitlich abgetasteten Sprachsignal durch eine Fast-Fourier-Transformation ein Merkmalsvektor gebildet, welcher charakteristische Merkmale des Sprachsignals im betrachteten Zeitrahmen wiedergibt. Beispielsweise werden hierzu 400 Samples in einem zeitlichen Analysefenster zusammengefaßt. Aus dem komplexen Spektrum der Fast-Fourier-Transformation kann das Leistungsspektrum des Sprachsignals berechnet werden. Hierzu wird das Sprachsignal beispielsweise mit 16 KHz abgetastet und es werden Merkmalsvektoren mit 16 oder mit 12 Bit Auflösung gebildet.

Diese Merkmalsvektoren MMV werden in einer Kalkulationseinheit EMB daraufhin untersucht, in wie weit sie von vorhandenen Hidden-Markov-Modellen für das jeweilige Schlüsselwort emittiert werden. Es werden also in der Kalkulationseinheit EMB die Emissionen für alle Zustände aller Hidden-Markov-Modelle bezüglich des jeweiligen Merkmalsvektors MMV untersucht. Falls bei den Hidden-Markov-Modellen überlagerte Normalverteilungen in Form von Gauß- oder Laplace-Verteilungen Verwendung gefunden haben, läßt sich die Emissionsberechnung im logarithmischen Maßstab auf die Berechnung des Cityblock-Abstandes reduzieren. Dieser Abstand wird auch als Score eines Zustandes für einen bestimmten Merkmalsvektor bezeichnet.

Diese Scores oder Emissionswahrscheinlichkeiten werden anschließend dem Erkenner ERK zugeführt. In diesem Erkenner wird die Segmentierung und Klassifikation des Sprachsignals durchgeführt. Beide Probleme werden mit Hilfe des Viterbi-Algorithmus gelöst, welcher für eine zu untersuchende Merkmalsvektorfolge die Erzeugungswahrscheinlichkeit dieser Merkmalsvektorfolge für das zugrundeliegende Hidden-Markov-Modell des Schlüsselwortes liefert. Um ein Hidden-Markov-Modell des Schlüsselwortes zu erhalten, werden Hidden-Markov-Modelle der einzelne Phoneme des Schlüsselwortes miteinander verkettet. Vorzugsweise wird um das Segmentierungsproblem zu lösen, kein fester Startzeitpunkt für das Hidden-Markov-Modell festgelegt. Vielmehr ist zu jedem Zeitpunkt ein Einsprung in den ersten Zustand möglich. Hierbei wird kein aufakkumulierter Score übernommen. Somit ist zu jedem Zeitpunkt ein neuer Wortbeginn möglich. Hierdurch entstehen jedoch unterschiedlich lange Viterbi-Pfade, welchen der Viterbi-Algorithmus beim Vergleich der Scores Rechnung tragen muß. Deshalb müssen längennormierte Scores erzeugt werden. Eine Rechenvorschrift, welche die Scores auf die Anzahl der durchlaufenden Zustände normiert gewährleistet deren Vergleichbarkeit bei unterschiedlichen Pfadlängen und lautet wie folgt:

$$
\mathrm{NSc}_{t,s_i} = \min_j \left( \mathrm{NSc}_{(t-1),s_i} \cdot \left( 1 - \frac{1}{1+L_{t-1,s_j}} \right) + \frac{1}{1+L_{t-1,s_j}} \cdot \left( A_{ij} + \mathrm{LSc}\left( \underline{x}_t \middle| s_j \right) \right) \right)
$$

$$(50)$$

# EP 0 834 861 B1

$$L_{t,s_i} = 1 + L_{(t-1),s_k} \qquad (80)$$

mit:

| | |
|---|---|
| $NSc_{t,s_i}$ : | normierter Score des Zustandes $s_j$ zum Zeitpunkt t |
| $L_{t,s_j}$ : | Länge des Pfades im Zustand $s_j$ zum Zeitpunkt t |
| $LSc(\underline{x}_t \vert s_j)$: | lokaler Score für Vektor $\underline{x}_t$ im Zustand $s_j$ |
| $A_{ij}$: | Übergangsstrafe |
| j : | Indizes der möglichen Vorgänger |
| k: | Index des besten Vorgängerzustandes |

Eine Berechnungsvorschrift für längennormierte Scores wurde ebenfalls schon in der Patentschrift WO-A-96/27871 angegeben. Bei der hier vorliegenden Rechenvorschrift werden probeweise die normierten Scores aller jener Pfade berechnet, die zum Zeitpunkt t in den Zustand $s_i$ führen, um sich durch die Weiterführung des Minimums für den Besten entscheiden zu können. Die Berechnung eines solchen Pfades erfolgt beispielsweise dadurch, daß die normierten Scores des Vorgängerzustandes zunächst abgeschwächt werden, indem sie auf die neue Länge des Pfades bezogen werden. Anschließend wird ein der neuen Länge entsprechender Anteil der Summe von Übergangsstrafe und lokalem Score aufaddiert. Zusätzlich zum normierten Score wird die Anzahl der durchlaufenden Zustände des zugehörigen Pfades weitergeführt. Die neue Länge bleibt dabei erhalten, indem die Länge des Vorgängerzustandes um 1 erhöht wird. Auf diese Weise wird der Score im letzten Zustand des Schlüsselwortes akkumuliert. Der nach dieser Rechenvorschrift berechnete Score des letzten Zustandes stellt somit keine monoton wachsende Größe mehr dar, sondern schwankt je nachdem, wie gut das Wortmodell das zu untersuchende Sprachsignal repräsentiert. Im Anschluß wird der erzielte Score mit einem Schwellenwert für den Score verglichen und falls dieser Schwellenwert unterschritten wird das Wort WO als erkannt ausgegeben.

Figur 2 zeigt als Beispiel eine solche Erkennungseinheit ERK. Hier ist diese Erkennungseinheit für mehrere Schlüsselworte ausgelegt, welche durch ihre Hidden-Markov-Modelle HMM10 bis HMM50 repräsentiert werden. Der Erkennungseinheit werden Emissionswahrscheinlichkeiten EMS zugeführt. Für jedes einzelne der zu erkennenden Schlüsselworte sind hier vorzugsweise separate Erkennungsuntereinheiten vorgesehen, welche jeweils eine separate Entscheidungseinheit 100 bis 500 aufweisen, in welchen anhand schlüsselwortindividueller Entscheidungsschwellen entschieden wird, ob das jeweilige Wort gesprochen wurde oder nicht. Falls das Wort gesprochen wurde wird es als Wort WO ausgegeben. Da es sich bei solchen Schlüsselworterkennern um Spracherkennungssysteme handelt, welche eine begrenzte Anzahl von Worten erkennen sollen, können bevorzugt für jedes einzelne zu erkennende Wort solche Wortuntererkennungseinheiten vorgesehen sein, um den Rechenvorgang und den Zeitaufwand für die Spracherkennung und das Word-Spotting zu minimieren. In diesem Zusammenhang ist zu bemerken, daß nicht lediglich wie hier dargestellt 5 Schlüsselworte erkannt werden können, sondern das eine beliebige Anzahl von Schlüsselworten mit dem erfindungsgemäßen Verfahren bearbeitet werden kann. In den Entscheidern 100 bis 500 wird beispielsweise auf Basis bestimmter Entscheidungskriterien eine Klassifikation vorgenommen. Hierzu wird beispielsweise das lokale Minimum des Zeitverlaufs des normierten Scores für das jeweilige Hidden-Markov-Modell des Schlüsselwortes untersucht, und festgestellt, ob dieser Wert unter einer bestimmten Entscheidungsschwelle liegt oder nicht. Beim Unterschreiten dieser Schwelle zeigt der Entscheider das Auftreten des jeweiligen Schlüsselwortes an, ansonsten wird davon ausgegangen, daß das Schlüsselwort nicht gesprochen wurde. Es ist dabei durchaus möglich, für alle Wortmodelle die gleiche Entscheidungsschwelle zu verwenden. Um die Erkennungsleistung zu verbessern, ist es jedoch sinnvoll, wortindividuelle Schwellen einzuführen.

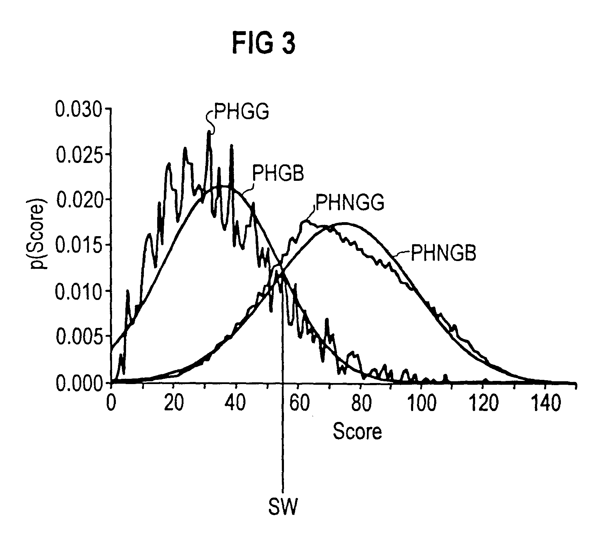

Figur 3 zeigt als Beispiel eine Gegenüberstellung der experimentell ermittelten Werte und der nach dem erfindungsgemäßen Verfahren berechneten Werte für die Verläufe von "Schlüsselwort wurde gesprochen" und "Schlüsselwort wurde nicht gesprochen". Mit PHGG und PHNGG sind die gemessenen Werte bzw. die experimentellen Werte bezeichnet mit PHGB und PHNGB sind die berechneten Werte nach dem erfindungsgemäßen Verfahren bezeichnet. Das N in der Bezeichnung bedeutet hierbei "nicht gesprochen". Nach rechts in diesem Diagramm ist der Score des jeweiligen Schlüsselwortes aus der Viterbi-Suche aufgetragen und nach oben die Wahrscheinlichkeit seines Auftretens. Beispielsweise wurde hier das Schlüsselwort UHR untersucht. Deutlich ist zu erkennen, daß die gemessenen und die berechneten Werte sehr gut übereinstimmen. Weiterhin ist zu bemerken, daß sich die beiden Kurven sehr stark überlappen. Eine sinnvolle Entscheidungsschwelle als Schwellenwert SW würde hier bei ca. 55 als Score angelegt. Dort liegt der Schnittpunkt der beiden Kurven. Alle Scores die über 55 liegen, würden also bedeuten, daß das Schlüsselwort UHR nicht gesprochen wurde.

Zur erfindungsgemäßen Berechnung der Wahrscheinlichkeitsdichteverteilung von Wortscores von Schlüsselwörtern, hier als PHGB und PHNGB bezeichnet, wird bevorzugt wie folgt vorgegangen:

Die Verteilung für "Schlüsselwort wurde nicht gesprochen", wird üblicherweise auch als Hintergrundverteilung bezeichnet. Erfindungsgemäß werden die Wahrscheinlichkeitsdichteverteilungen der Scores durch die Überlagerung von Wahrscheinlichkeitsdichtefunktionen einzelner Phoneme, welche das Schlüsselwort aufbauen, längengewichtet berechnet. Zum einen ist die Erstellung von aussagekräftigen Histogrammen für die Phonemscores leichter möglich, als die von Wortscores, da aufgrund der beschränkten Anzahl von ca. 40 Phonemen jedes einzelne ausreichend häufig in Sprachproben enthalten ist. Nach dem erfindungsgemäßen Verfahren müssen also lediglich für diese 40 Grundbausteine, falls diese natürlich in den verwendeten Schlüsselworten auftreten, Histogramme ermittelt und gespeichert werden und dennoch können daraus für jedes beliebige Schlüsselwort Wort- und Hintergrundverteilung berechnet werden. Insbesondere ist dies auch für nie gesprochene Schlüsselworte möglich.

Erfindungsgemäß wird bei der Wort- und Hintergrundverteilung eines Schlüsselwortes davon ausgegangen, daß der Score Y eines Wortes eine Zufallsgröße ist, die als Linearkombination von Phonem-Zufallsgrößen $X_i$ dargestellt werden kann. Dabei wird davon ausgegangen, daß diese Phonem-Zufallsgrößen voneinander statistisch unabhängig sind. Weil dabei ein Schlüsselwort aus mehreren Phonemen unterschiedlicher Länge bestehen kann, müssen zusätzlich Gewichtungsfaktoren $\alpha_i$ entsprechend der unterschiedlichen Länge $L_i$ der jeweiligen Phoneme eingeführt werden. Damit läßt sich der Score wie folgt darstellen:

$$Y = \alpha_1 \cdot X_1 + \alpha_2 \cdot X_2 + ... \text{ mit } \qquad \alpha_i = L_i / L_{ges} \qquad\qquad (100)$$

Die Wahrscheinlickeitsdichtefunktion $f_y$ einer solchen Linearkombination von Zufallsgrößen erhält man erfindungsgemäß durch die Faltung der beteiligten skalierten Dichtefunktionen $f_{xi}$, welche sich wie folgt darstellt:

$$f_y(y) = \frac{1}{\alpha_1} f_{X_1}\left(\frac{1}{\alpha_1} y\right) * \frac{1}{\alpha_2} f_{X_2}\left(\frac{1}{\alpha_2} y\right) * ... \qquad\qquad (200)$$

Auf diese Weise ist es möglich, Wahrscheinlichkeitsdichtefunktionen von beliebigen Wörten aus Phonembausteinen zu berechnen, ohne daß die betreffenden Worte gesprochen werden müssen. Da eine Auswertung der Gleichung 200 im allgemeinen Fall recht aufwendig ist, bietet es sich an für die Modellierung der tatsächlichen Verteilungen der Phoneme Normalverteilungen anzunehmen, welche beispielsweise die Gauß-Verteilung die Laplace-Verteilung oder auch Binomial-Verteilungen sein können. Im Falle von Gauß-Verteilungen müssen dazu für jedes einzelne Phonem lediglich die Varianz $\sigma^2$ und der Mittelwert $\mu$ bestimmt werden. Um eine Entscheidungsschwelle dafür festzulegen, ob das Schlüsselwort gesprochen oder nicht gesprochen wurde bieten sich unterschiedliche Methoden an. Zum einen ist es möglich, die Detektionsrate und die Falschakzeptanzrate mittels eines Gütekriteriums zu optimieren. Beispielsweise kann dies durch den Bayes'schen-Klassifikationsansatz geschehen. Es besteht jedoch auch die Möglichkeit, ohne eine Optimierung eine der beiden Größen als Detektionsrate oder Falschakzeptanzrate vorzugeben. Die jeweils korrespondierende Größe stellt sich dann automatisch ein.

Bei der Vorgabe einer festen Detektionsrate, bzw. einer festen Falschakzeptanzrate wird im Sinne einer Bayes'schen Optimierung auf eine Optimierung eines Gütemaßes verzichtet. Hierzu wird beispielsweise ausgegangen von einer Wortverteilung $p(X/\omega)$ und einer Hintergrundverteilung $p(X/\overline{\omega})$ des Schlüsselwortes. Damit lassen sich die Detektionsrate DET und die Falschakzeptanzrate FAL für eine bestimmte Entscheidungsschwelle $X_s$ durch folgende Zusammenhänge darstellen:

$$DET = \int_0^{X_s} p(X|\omega) dX \qquad\qquad (300)$$

$$FAL = \int_0^{X_s} p(X|\overline{\omega}) dX \qquad\qquad (400)$$

Hierbei ist zu beachten, daß die Formelzeichen nicht mit den Bezugzeichen in der Figur übereinstimmen, um eine einfachere Darstellung zu erreichen. Die Wortverteilung $p(X/\omega)$ entspricht in Figur 3 der Verteilung PHGB und die Hintergrundverteilung $p(X/\bar{\omega})$ entspricht in Figur 3 der Verteilung PHNGB. Während die Schwelle $X_s$ dem Schwellenwert SW in Figur 3 entspricht. Falls für die Berechnung die Wahrscheinlichkeitsdichtefunktionen gaußisch modelliert werden, ist es mit Hilfe der Normalverteilungen $\Phi$ bzw. mit ihrer Umkehrfunktion $\Phi^{-1}$ möglich, diese Formel explizit nach der Schwelle $X_s$ aufzulösen:

$$X_s = \mu_w + \sigma_w \cdot \Phi^{-1}(DET) \tag{500}$$

$$X_s = \mu_H + \sigma_H \cdot \Phi^{-1}(FAL) \tag{600}$$

Dabei ist die Normalverteilung $\Phi$ durch:

$$\Phi(t) = \int_{-\infty}^{t} \frac{1}{\sqrt{2\pi}} \cdot e^{-\frac{\tau^2}{2}} d\tau \tag{700}$$

gegeben. Auf diese Weise erhält man erfindungsgemäß wortindividuelle Schwellen, welche im Falle der Vorgabe einer festen Detektionsrate nur von den beiden Parametern $\mu_w$ und $\sigma_w$ also der Mittelwert und der Standardabweichung der Wortverteilung $p(X/\bar{\omega})$ abhängen. Im Falle der Vorgabe einer festen Falschakzeptanzrate hängen die wortindividuellen Schwellen also nur von der Standardabweichung $\sigma_H$ und dem Mittelwert $\mu_H$ der Hintergrundverteilung $p(X/\bar{\omega})$ ab. Anschaulich entspricht diese Formeldarstellung einer Beschränkung des Flächeninhaltes unter der gewählten Verteilungskurve. Die Verteilungskurve wird dann senkrecht zur Abszisse abgeschnitten und bildet beispielsweise den Schwellenwert $X_s$, der in Figur 3 als SW dargestellt ist.

## Patentansprüche

1. Verfahren zur Berechnung eines Schwellenwertes für das Wahrscheinlichkeitsmaß für das Vorhandensein eines Schlüsselwortes anhand dem entschieden wird, ob dieses Schlüsselwort in einem Sprachsignal vorliegt,

   a) bei dem eine Wahrscheinlichkeitsdichtefunktion des Schlüsselwortes dadurch gebildet wird, daß das Schlüsselwort in seine Phoneme zerlegt wird und deren Wahrscheinlichkeitsdichtefunktionen miteinander phonemweise wortlängengewichtet gefaltet werden,
   b) und bei dem der Schwellenwert dadurch gebildet wird, daß ein Flächeninhalt unter der gebildeten Wahrscheinlichkeitsdichtefunktion über den Score des Schlüsselwortes als Maß für die zulässige Detektions-/ Falschakzeptanzrate des Schlüsselwortes vorgegeben wird, und daß parallel zur Ordinatenachse das Wahrscheinlichkeitsmaß durch eine Begrenzungsgerade begrenzt wird, wobei der Schnittpunkt der Begrenzungsgerade mit der Abszissenachse den Schwellenwert ergibt.

2. Verfahren nach Anspruch 1, bei dem die jeweiligen Phonemverteilungen durch Standardverteilungen angenähert werden.

3. Verfahren nach Anspruch 2, bei dem als Standardverteilung die Gaußverteilung und phonemspezifisch ein einziges Mal experimentell die Varianz und der Mittelwert bestimmt wird.

4. Verfahren nach einem der vorangehenden Ansprüche, bei dem die Wahrscheinlichkeitsdichteverteilung eines Schlüsselwortscores wie folgt bestimmt wird:
   die Wahrscheinlichkeitsverteilung Y des Hidden Markov Modelles wird aus den Phonemverteilungen X und deren Länge L nach

$$Y = \alpha_1 \cdot X_1 + \alpha_2 \cdot X_2 + ... \text{ mit} \qquad \alpha_i = L_i/L_{ges} \tag{100}$$

berechnet und seine Wahrscheinlichkeitsdichteverteilung $f_y$ nach

$$f_y(y) = \frac{1}{\alpha_1} f_{X_1}\left(\frac{1}{\alpha_1} y\right) * \frac{1}{\alpha_2} f_{X_2}\left(\frac{1}{\alpha_2} y\right) * \ldots \qquad (200)$$

berechnet.

5. Verfahren nach Anspruch 4, bei dem der Schwellenwert $X_s$ über eine vorgegebene Detektionsrate DET aus

$$DET = \int_0^{X_s} p(X|\omega)dX \qquad (300)$$

bestimmt wird, oder über eine Falschakzeptanzrate FAL aus

$$FAL = \int_0^{X_s} p(X|\overline{\omega})dX \qquad (400)$$

bestimmt wird, wobei $\omega$ für den Fall steht daß das Schlüsselwort gesprochen wurde und $\overline{\omega}$ für den Fall steht daß das Schlüsselwort nicht gesprochen wurde.

6. Verfahren nach Anspruch 5 und 3, bei dem die Schwellenwerte wie folgt bestimmt werden:

$$X_s = \mu_w + \sigma_w \cdot \Phi^{-1}(DET) \qquad (500)$$

$$X_s = \mu_H + \sigma_H \cdot \Phi^{-1}(FAL) \qquad (600)$$

mit der Normalverteilungsfunktion

$$\Phi(t) = \int_{-\infty}^{t} \frac{1}{\sqrt{2\pi}} \cdot e^{-\frac{\tau^2}{2}} d\tau \qquad (700)$$

mit $\mu$ als Mittelwert und $\sigma$ als Standardabweichung, sowie Index w für den Fall, daß das Schlüsselwort gesprochen wurde und Index H für den Fall, daß das Schlüsselwort nicht gesprochen wurde.

7. Verfahren zur Spracherkennung eines Schlüsselwortes, bei dem in einer Erkennungsstufe das zu erkennende Schlüsselwort anhand eines Schwellenwertes bewertet wird, welcher nach einem der vorangehenden Ansprüche bestimmt wird.

8. Verfahren nach Anspruch 7, bei dem mindestens zwei Schlüsselworte in jeweils einer separaten Erkennungsstufe je Schlüsselwort zeitgleich bewertet werden.

9. Verfahren nach einem der vorangehenden Ansprüche, bei dem bei der Viterbi-Suche zur Berechnung einer Trefferrate für ein hidden Markov Schlüsselwortmodell folgende normierte Form der Rekursionsformel verwendet wird:

$$NSc_{t,s_i} = \min_{j}\left( NSc_{(t-1),s_i} \cdot \left(1 - \frac{1}{1+L_{t-1,s_j}}\right) + \frac{1}{1+L_{t-1,s_j}} \cdot \left(A_{ij} + LSc\left(\underline{x}_t|s_j\right)\right)\right)$$

(50)

$$L_{t,s_i} = 1 + L_{(t-1),s_k}$$ 

(80)

mit:

| | |
|---|---|
| $NSc_{t,s_i}$ : | normierter Score des Zustandes $s_j$ zum Zeitpunkt t |
| $L_{t,s_j}$ : | Länge des Pfades im Zustand $s_j$ zum Zeitpunkt t |
| $LSc(\underline{x}_t|s_j)$: | lokaler Score für Vektor $\underline{x}_t$ im Zustand $s_j$ |
| $A_{ij}$: | Übergangsstrafe |
| j : | Indizes der möglichen Vorgänger |
| k: | Index des besten Vorgängerzustandes |

**Claims**

1. Method for calculating a threshold value for the probability measure for the existence of a keyword with the aid of which a decision is made as to whether this keyword is present in a speech signal,

   a) in which method a probability density function of the keyword is formed by decomposing the keyword into its phonemes, and the probability density functions thereof are folded with one another in a phoneme-by-phoneme fashion weighted by word length,

   b) and in which method the threshold value is formed by virtue of the fact that under the probability density function formed a surface area is prescribed via the score of the keyword as a measure of the permissible detection/false acceptance rate of the keyword, and the probability measure is limited parallel to the y-axis by a boundary straight line, the point of intersection of the boundary straight line with the x-axis yielding the threshold value.

2. Method according to Claim 1, in which the respective phoneme distributions are approximated by standard distributions.

3. Method according to Claim 2, in which as standard distribution the Gaussian distribution is determined and the variance and the mean are determined experimentally once in a phoneme-specific fashion.

4. Method according to one of the preceding claims, in which the probability density distribution of a keyword score is determined as follows:
   the probability distribution Y of the hidden Markov model is calculated from the phoneme distributions X and their length L using

$$Y = \alpha_1 \cdot X_1 + \alpha_2 \cdot X_2 + ... \text{ with } \quad \alpha_i = L_i/L_{ges}$$

(100)

and its probability density distribution $f_y$ is calculated using

$$f_y(y) = \frac{1}{\alpha_1} f_{X_1}\left(\frac{1}{\alpha_1} y\right) * \frac{1}{\alpha_2} f_{X_2}\left(\frac{1}{\alpha_2} y\right) * ...$$

(200)

**5.** Method according to Claim 4, in which the threshold value $X_s$ is determined at a prescribed detection rate DET from

$$DET = \int_0^{X_s} p(X|\omega)dX \qquad (300)$$

or at a false-acceptance rate FAL from

$$FAL = \int_0^{X_s} p(X|\overline{\omega})dX \, . \qquad (400)$$

$\omega$ standing for the case that the keyword has been spoken, and $\overline{\omega}$ standing for the case that the keyword has not been spoken.

**6.** Method according to Claims 5 and 3, in which the threshold values are determined as follows:

$$X_s = \mu_w + \sigma_w \cdot \Phi^{-1}(DET) \qquad (500)$$

$$X_s = \mu_H + \sigma_H \cdot \Phi^{-1}(FAL) \qquad (600)$$

with the normal distribution function

$$\Phi(t) = \int_{-\infty}^{t} \frac{1}{\sqrt{2\pi}} \cdot e^{-\frac{\tau^2}{2}} d\tau \qquad (700)$$

where $\mu$ is the mean and $\sigma$ is the standard deviation, and the index w stands for the case that the keyword has been spoken and the index H for the case that the keyword has not been spoken.

**7.** Method for speech recognition of a keyword, in which the keyword to be recognized is evaluated in the recognition stage with the aid of a threshold value which is determined according to one of the preceding claims.

**8.** Method according to Claim 7, in which at least two keywords are evaluated simultaneously in a separate detection stage each per keyword.

**9.** Method according to one of the preceding claims, in which the following normalized form of the recursion formula is used during the Viterbi search to calculate a hit rate for a hidden Markov keyword model:

$$NSc_{t.s_i} = \min_j \left( NSc_{(t-1).s_i} \cdot \left( 1 - \frac{1}{1+L_{t-1.s_j}} \right) + \frac{1}{1+L_{t-1.s_j}} \cdot \left( A_{ij} + LSc(\underline{x}_t|s_j) \right) \right) \qquad (50)$$

$$L_{t,s_i} = 1 + L_{(t-1),s_k} \qquad (80)$$

## Revendications

1. Procédé pour le calcul d'une valeur de seuil destinée à la mesure de probabilité de la présence d'un mot-clé, valeur de seuil à l'aide de laquelle on décide si ce mot-clé se trouve dans le signal de parole,

   a) dans lequel on forme une fonction de densité de probabilité du mot-clé en décomposant le mot-clé selon ses phonèmes et en effectuant la convolution de leurs fonctions de densités de probabilités entre elles, phonème par phonème, avec une pondération en longueur de mot,
   b) et dans lequel on forme la valeur de seuil en prescrivant un contenu de surface sous la fonction de densité de probabilité formée sur le score du mot-clé comme mesure pour le taux autorisé de détection/d'acceptation erronée du mot-clé et en limitant la mesure de probabilité parallèlement à l'axe des ordonnées par une droite de limitation, l'intersection de la droite de limitation et de l'axe des abscisses donnant la valeur de seuil.

2. Procédé selon la revendication 1, dans lequel on approche les distributions de phonèmes respectives par des distributions standards.

3. Procédé selon la revendication 2, dans lequel on détermine comme distribution standard la distribution de Gauss et, de manière spécifique au phonème, une seule fois expérimentalement, la variance et la valeur moyenne.

4. Procédé selon l'une des revendications précédentes, dans lequel on détermine la distribution de densité de probabilité d'un score de mot-clé de la manière suivante :
   on calcule la distribution de probabilité Y du modèle de Markov caché à partir des distributions de phonèmes X et de leurs longueurs L selon :

$$Y = \alpha_1 \cdot X_1 + \alpha_2 \cdot X_2 + ... \text{ avec} \qquad \alpha_i = L_i/L_{ges} \qquad (100)$$

   et on calcule sa distribution de densité de probabilité fy selon :

$$f_Y(y) = \frac{1}{\alpha_1} f_{X1}\left(\frac{1}{\alpha_1} y\right) * \frac{1}{\alpha_2} f_{X2}\left(\frac{1}{\alpha_2} y\right) * ... \qquad (200)$$

5. Procédé selon la revendication 4, dans lequel on détermine la valeur de seuil $X_s$ pour un taux de détection prescrit DET à partir de

$$DET = \int_0^{X_s} p(X|\omega) \, dX \qquad (300)$$

   ou pour un taux d'acceptation erronée FAL à partir de

$$FAL = \int_0^{X_s} p(X|\overline{\omega}) \, dX \qquad (400)$$

$\omega$ correspondant au cas où le mot-clé a été prononcé et $\bar{\omega}$ correspondant au cas où le mot-clé n'a pas été prononcé.

6. Procédé selon la revendication 5 et 3, dans lequel on détermine les valeurs de seuil de la manière suivante :

$$X_s = \mu_W + \sigma_W \cdot \Phi^{-1} \text{ (DET)} \qquad (500)$$

$$X_S = \mu_H + \sigma_H \cdot \Phi^{-1} \text{ (FAL)} \qquad (600)$$

avec la fonction de distribution normale

$$\Phi(t) = \int_{-\infty}^{t} \frac{1}{\sqrt{2\pi}} \cdot e^{-\frac{\tau^2}{2}} d\tau \qquad (700)$$

avec $\mu$ comme valeur moyenne et $\sigma$ comme écart type, ainsi que l'indice w pour le cas où le mot-clé a été prononcé et l'indice H pour le cas où le mot-clé n'a pas été prononcé.

7. Procédé pour la reconnaissance de la parole d'un mot-clé, dans lequel on évalue dans un étage de reconnaissance le mot-clé à reconnaître à l'aide de sa valeur de seuil qui est déterminée selon l'une des revendications précédentes.

8. Procédé selon la revendication 7, dans lequel on évalue de manière isochrone au moins deux mots-clés à chaque fois dans un étage de reconnaissance séparé pour chaque mot-clé.

9. Procédé selon l'une des revendications précédentes, dans lequel on utilise lors de la recherche de Viterbi pour le calcul d'un taux de réussite pour un modèle de mot-clé de Markov caché la forme normée ci-dessous de la formule de récurrence :

$$NSc_{t,s_i} = \min_{j}\left( NSc_{(t-1),s_i} \cdot \left(1 - \frac{1}{1 + L_{t-1,s_j}}\right) + \frac{1}{1 + L_{t-1,s_j}} \cdot \left(A_{ij} + LSc\left(\underline{x}_t\middle|s_j\right)\right)\right) \qquad (50)$$

$$L_{t,s_i} = 1 + L_{(t-1),s_k} \qquad (80)$$

avec :

$NSc_{t,\,s_i}$ : score normé de l'état $s_j$ à l'instant t
$L_{t,\,s_j}$ longueur du chemin dans l'état $s_j$ à l'instant t
$LSc(\underline{x}_t|s_j)$ : score local pour le vecteur $\underline{x}_t$ dans l'état $s_j$
$A_{ij}$ : peine de transition
j : indice des prédécesseurs possibles
k : indice du meilleur état de prédécesseur

# FIG 1

SPR → [ VOR ] → MMV → [ EMB ] → EMS → [ ERK ] → WO

# FIG 2

EMS →
- → [ HMM 10 ] → [ 100 ] →
- → [ HMM 20 ] → [ 200 ] →
- → [ HMM 30 ] → [ 300 ] →
- → [ HMM 40 ] → [ 400 ] →
- → [ HMM 50 ] → [ 500 ] →
→ WO

ERK

# FIG 3